Europäisches Patentamt

(19) European Patent Office    (11) Publication number:    **0 083 974**

Office européen des brevets    **B1**

(12)    **EUROPEAN PATENT SPECIFICATION**

(45) Date of publication of patent specification: **30.10.85**    (51) Int. Cl.⁴: **B 01 J 2/16,** E 21 B 43/267,
C 01 F 7/02

(21) Application number: **83300071.4**

(22) Date of filing: **06.01.83**

(54) **A process for the production of sintered spheres.**

(30) Priority: **07.01.82 DK 36/82**

(43) Date of publication of application:
**20.07.83 Bulletin 83/29**

(45) Publication of the grant of the patent:
**30.10.85 Bulletin 85/44**

(84) Designated Contracting States:
**CH DE FR GB IT LI SE**

(56) References cited:
**FR-A-1 483 696**
**GB-A-2 079 261**

(73) Proprietor: **A/S NIRO ATOMIZER**
**No. 305 Gladsaxevej**
**DK-2680 Soeborg (DK)**
(73) Proprietor: **DRESSER INDUSTRIES, INC.**
**The Dresser Building Elm At Akard P.O. Box 718**
**Dallas Texas 75021 (US)**

(72) Inventor: **LUNGHOFER, EUGENE PAUL**
**324 Carrollwood Drive**
**Youngstown, N.Y. 14174 (US)**
Inventor: **Mortensen, Sten**
**9165 Rumsey Road**
**Columbia Maryland 21045 (US)**
Inventor: **Ward, Aubrey Preston**
**5858 Morningbird Lane**
**Columbia Maryland 21045 (US)**

(74) Representative: **Pennant, Pyers et al**
**Stevens, Hewlett & Perkins 5 Quality Court**
**Chancery Lane**
**London, WC2A 1HZ (GB)**

Courier Press, Leamington Spa, England.

## Description

### Background of the Invention

It is well known that the productivity of an oil or gas well may often be increased by a procedure which involves creating a fracture in the subterranean formations surrounding a well and propping the fracture opening by filling it with granular material called propping agent. Methods of this type are disclosed in US—patent specifications Nos. 3 701 383 and 4 068 718.

A survey of propping agents and their manufacture is given in the specification to DE—A—2 921 336.

A granular material must fulfil several conditions to be suitable for use as a propping agent. The material must have high strength to avoid crushing of the particles when exposed to high pressure during their application. The shape of the individual particle should depart as little as possible from the spherical one and the particle size distribution should be within defined, relative narrow limits to insure sufficient gas and oil permeability of fractures propped with the propping agent. Moreover, the particles should be able to resist the corrosive conditions to which they may be exposed at their application.

The material hitherto regarded as most suitable for fulfilling these conditions is sintered bauxite pellets.

Several methods have been proposed for producing sintered bauxite particles. The process which has hitherto found widest commercial success is the one described in the above DE—A—2 921 336.

According to said methods bauxite spheres are first prepared by agglomeration of a mixture of bauxite, temporary binder and water in an intensive mixer to produce spheres called green pellets, which are afterwards sintered by heating. In the embodiment examples of said application the products have a typical density of 3.7 g/cm³, while the crushing loss measured by the method described below was 8,16% and 6,8%, resp.

It is, however, a drawback of said process that the granulation, which is carried out in an intensive mixer, can only be performed batch-wise. Moreover, said prior art process usually requires a preliminary drying of the starting material.

### Summary of the Invention

It is, however, generally recognized that usually a continuous process is to be preferred to a batch-wise process when a large-scale industrial production is concerned.

It is therefore an object of the invention to provide a process for the production of sintered spheres comprising steps all of which may be performed continuously.

Since any crushing of the spheres by their use as fracture propping agents involves an impaired permeability of the propped fracture it is desired to obtain a strength of spheres corresponding to a crushing loss even lower than the results obtained according to DE—A—2 921 336.

Consequently it is another object of the invention to provide a process resulting in spheres having a crushing loss, measured by the below defined method, less than most prior art propping agents.

In the above prior art process using an intensive mixer the possibilities are rather limited for controling the granulometry of the product, e.g. because a certain minimum mixing intensity will always be necessary to secure homogeneity of the individual particles. This means that a product having a very narrow particle size distribution, as is often required for propping agents, can only be prepared by simultaneous production of a substantial amount of particles being too small or too large, which necessitates extensive sieving operations and impairs total process economy.

Therefore it is a further object of the invention to provide a process which may easily be adapted to produce a major fraction of particles complying to varying requirements as to particle size distribution.

As stated above a typical density of sintered bauxite propping agents is 3.7 g/cm³. However in many applications it is advantageous to have propping agents of lower density and consequently it is also an object of the invention to provide low density but high strength propping agents.

Finally it is an object of the invention to provide propping agents which are less costly to produce than prior art bauxite proppants.

The above objects are according to the invention achieved by a continuous process for the production of sintered spheres suitable for use as fracture propping agent in oil and gas wells, which process comprises the steps of

(a) preparing an aqueous feed suspension comprising aluminous-siliceous ore and a binder,

(b) atomizing said feed suspension into a layer of already partly dried aluminous-siliceous ore particles fluidized in a stream of drying air,

(c) recovering particles from said layer

(d) separating said recovered particles in oversize, undersize and product fractions, making allowance for shrinkage in the subsequent sintering operation,

(e) recycling material selected from the group consisting of undersize fractions, relative fine product fractions, ground product fractions and ground oversize fractions, to the layer of fluidized particles at a site at substantial distance, measured along the flow path of the particles, from the site where said recovering of particles takes place, and

(f) drying and sintering the non-recycled product fractions by heating them at a temperature between 1200 and 1650°C.

A method involving steps in principle corresponding to the above steps (b)—(e) is called fluidized spray granulation and has been suggested for the granulation of various inorganic and organic products. Spray granulations has, however, not been suggested for the manufacture of green proppant pellets and the suitability of the method for this specific purpose could in no way be predicted. In fact it is rather surprising that a perfect spherical shape of the pellets can be obtained, considering the very rapid evaporation of the atomized suspension in the process.

The crushing strength of the resulting sintered particles is to a substantial extent dependent on the homogeneity of the green proppant pellets, and it is also rather surprising that a spray granulation process is able to produce pellets which are superior also in that respect.

A corresponding process by which high density bauxite propping agents are produced is described in British patent application 8.022.175, published 20th January, 1982.

The aluminous-siliceous ores which are used contain along with hydrated alumina, widely varying amounts of kaolinitic materials such as aluminium silicate and the impurities generally occurring with it. These materials are described, i.a. in Encyclopedia of the Geologic Sciences, Mcgraw-Hill (1978) and Glossary of Geology, American Geological Institute (1972). Even materials which (after ignition at 800°C) show an analysis of only 50—60% by weight or even less $Al_2O_3$ with the balance being $SiO_2$ and incidential impurities produce proppants having a crushing strength sufficient for several applications. Said silicate-containing aluminous ores are very inexpensive starting materials and have not previously been regarded as suitable for proppant manufacture.

Said silicate containing materials are especially suitable for use in the present process since dispersions hereof for use as feed in the spray granulation process, may be produced easily by using low energy wet methods such as ball milling or other agitation means, possibly combined with screening operations. Ball milling for 30 minutes or less reduce 98% of the material to less than 10 microns.

All steps of the process of the invention may be carried out in a continuous manner, which makes the process especially attractive for large scale proppant manufacture. It is a further advantage of the process that the preliminary drying necessary in prior art methods is disposed of.

By using the steps (a)—(e) it is possible to obtain pellets of spherical shape and of sufficient strength for handling prior to and during the final drying and sintering process. When an aluminous-siliceous ore as the one defined in the Example below is employed, proppant particles of high crush strengths but of lower densities $(2,50—2,85 \text{ g/cm}^3)$ may be obtained. Such high strength but low density materials are advantageous in many applications and are less costly to produce.

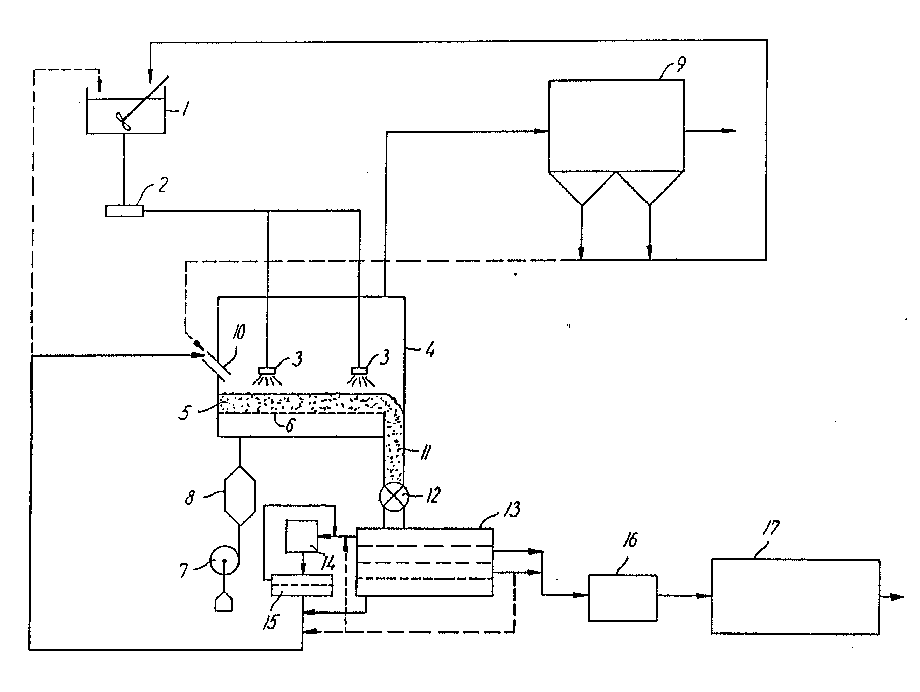

Description of the Drawing

The invention is further elucidated with reference to the drawing, which is a schematic flow sheet illustrating an embodiment of the process.

Description of the Invention

On the drawing a feed tank is designated 1. In this tank an aqueous feed suspension comprising aluminous-siliceous ore and a binder is prepared. Preferably the feed contains 40—60, more preferably approximately 50% by weight of said ore and preferably 0.25—5, more preferably 0.5—2.5% by weight binder. The ore should preferably have a particle size below 20 micron which is conveniently achieved by a wet grinding process which is less energy consuming than dry milling prescribed in connection with some of the prior art processes.

The preferred binders are polyvinyl acetate, polyvinyl alcohol, methylcellulose, dextrin and molasses.

The function of the binder is to provide green strength to the pellets until the sintering thereof. During the sintering most of the binders coming into consideration will decompose. This means that a relatively high amount of binder will impair the strength of the final sintered product, for which reason binders are preferred which exhibit a sufficient temporary binding ability even when used in small amounts.

Also further auxiliary agents may be added to the feed, such as dispersing agents, e.g. polyelectrolytes such as "Darvan C", tetra sodium pyrophosphate, tetra potassium pyrophosphate, polyphosphate, ammonium citrate, or ferric ammonium citrate. With all of these the pH is adjusted to ensure complete deflocculation.

From the tank 1 the feed is led to a pump 2 feeding atomizing nozzles 3 arranged in a fluidized bed unit 4.

Between the feed tank 1 and the nozzles 3 may be inserted a grinding mill and/or a sieve (not shown) to prevent that too coarse particles reach the nozzles and the fluid bed.

The atomizing nozzles 3 are pressure nozzles of conventional design, or two-fluid nozzles. The design of such nozzles is well known e.g. from K. Masters: "Spray Drying Handbook", John Wiley and Sons, New (1979).

The fluid bed unit 4 is of conventional design as described in e.g. US patent specification 3.533.829 and in British patent specification 1.401.303.

In the illustrated embodiment a fluidized particle layer 5 is supported by a perforated plate 6 through which hot fluidizing gas is flowing. Said hot gas is introduced in the bottom part of the fluid bed unit by means of a fan 7 and an air heater 8.

The distance from the atomizing nozzles 3 to the perforated plate 6 is adjustable and the nozzles are preferably positioned a rather short distance above the surface of the fluidized particle layer 5. The exact position of the nozzles will in each individual case be fixed with due regard to the fact that too long distance from the nozzles to the surface of the fluidized layer causes undesired dust formation, because the atomized feed droplets will be dried to too high an extent, before they reach the fluidized layer, while a too short distance on the other hand results in formation of irregular and too coarse particles. Therefore, the position of the nozzles is adjusted on the basis of analyses of powder taken out from the fluid bed unit.

The velocity of the fluidizing and drying air passing the layer 5 is preferably 0.5—1.5 m/sec. and the height of the fluidized particle layer will typically be 20—60 cm.

The temperature of the drying- and fluidizing air when introduced at the bottom part of the fluid bed unit 4 will preferably be 250—650°C, more preferably 400—600°C.

When leaving the fluid bed unit the temperature of said air is preferably below 100°C, more preferably approximately 70°C.

From the fluid bed unit the air entraining dust consisting primarily of fine ore particles are led to a collector means 9, which may for instance be an electrostatic precipitator, a cyclone, a bag filter or a wet scrubber or a combination thereof.

Particles recovered in the collector means 9 may be recycled to the feed tank 1 and/or to the fluidized bed unit 4. It has turned out that the fine particles collected in 9 are very suitable for being recycled as seed particles to the fluidized bed due to their uniform spheroidal shape, and in this respect they are superior to other seed particles obtained by grinding as explained below.

It is essential that the fluid bed unit 4 is designed to give a long and uniform residence time for the particles to obtain a desired particle size distribution and the desired spherical shape of the product. Therefore, the flow of particles in the fluidized layer should be of the type conventionally termed plug flow, which is a flow pattern wherein very little back mixing takes place. Thereby an equal treatment of all particles is secured.

In a fluidized particle layer plug flow of the particles may be obtained by various measures. In the embodiment shown in the drawing the desired flow pattern is obtained by introducing powder particles serving as seeds or nuclei through a powder inlet 10 in one end of the fluid bed unit 4 and removing particles from the fluidized layer 5 through an outlet 11 situated at the opposite end of the fluid bed unit. Alternatively plug flow may be obtained by using guide walls in the fluid bed as is well known in the art.

The seed or nuclei particles introduced through powder inlet 10 consist of recycled material as will be explained above and further elucidated below.

Alternatively to the illustrated embodiment the fluid bed unit may comprise two or several compartments in which different conditions prevail as to fluidizing air velocity, temperature and slurry feeding conditions. Such fluid bed units having more than one compartment are well known in the art, and may e.g. have a circular perforated plate and radian partitions preventing back mixing.

Through the powder outlet 11 is withdrawn a powder having a moisture content of 1—5%, which powder via a rotary valve 12 is conducted to a sieving unit 13 wherein it is separated into three or more fractions, viz. an oversize fraction, one or more product fractions (in the embodiment shown: two fractions) and an undersize fraction.

The oversize fraction is conducted to a grinding unit comprising a mill 14 and sieve 15 which may possibly be combined. Oversize material are recycled from the sieve 15 to the mill 14 and fractions having preferably a size of app. 0.5 mm are, in the embodiment shown, led to the powder inlet 10 of the fluid bed unit together with the fine fraction. In case the quantity of material of these two fractions, together with material collected in 9, is not sufficient to form seed or nuclei material for the fluid bed, a part of the product fraction or of one of the product fractions may be added thereto as indicated by the dotted line in the lower part of the drawing. A part of or the total amount of recycled product fraction may be ground before being introduced to the fluid bed, as indicated on the drawing. On the other hand, if the amount of material in the oversize fraction together with the undersize fraction is higher than what is required to supplement seed or nuclei material, a part thereof may be added to the feed tank 1, as illustrated by the dotted line in the left upperpart of the drawing.

Non-recycled product fraction or fractions are led to a drying oven 16 wherein residual moisture and organic additives are evaporated and thereafter to a kiln 17, e.g. a rotary kiln, wherein the particles are sintered to form high strength spheres suitable as propping agents. The firing process taking place in the kiln 17 is conducted under the same conditions as those used in the prior art processes in which an agglomeration has been performed in a mixing apparatus using bauxite as starting material.

The size limits for the product fractions separated in the sieving unit 13 must be fixed with due regard to the fact that in the subsequent firing process in the kiln 17 a substantial shrinkage takes place. The extent of this shrinkage depends on the origin of the starting material and may typically amount to app. 25% on linear basis.

As it appears the process may be performed on a continuous basis and it is very suitable for being automatically controlled using a minimum of manpower.

As mentioned above the resulting propping agent has low density and high crushing strength. The crushing strength is evaluated by a method in which the fraction between app. 600 microns and app. 700 microns is placed in a $1\frac{5}{8}$ inch (41 mm) diameter steel cylinder, and pressure is applied to the sample through a plunger fitting the top of the cylinder according to the following schedule: 1 minute to 700 $kg/cm^2$, 3 minutes hold at this pressure and 1 minute down to 0 pressure. Afterwards the amount of material having a particle size below 600 microns is measured and expressed as % of the total amount. The result is recorded as the weight % crushing loss.

The invention is further elucidated by means of the following embodiment example.

Example

The process is carried out in a plant corresponding to the one illustrated on the drawing.

The starting material is an aluminous-siliceous ore from Eufaula, Alabama, USA, showing the following analysis (after ignition at 800° C): $Al_2O_3$ 50,7% by weight, $SiO_2$ 45,8% by weight, $TiO_2$ 2,60% by weight, $Fe_2O_3$ 0,71% by weight, the remainder being alkali and alkali earth metal oxides. An aqueous dispersion of the material as mined is prepared using ball milling or mechanical agitation and addition of 0,25% "Darvan C" or 0,2% sodium pyrophosphate. Water is added to a solids content of 45%. The pH is adjusted with NaOH to above 8 to insure complete deflocculation and low viscosity. 0,75% "Gelvatol" 20/30 is added as temporary binder. This feed is in an amount of 4000 kg/hour atomized through the pressure nozzles 3 in a fluid bed unit in principle designed as shown on the drawing and having a fluidizing area of 3 m².

The velocity of the fluidizing air is 1.2 m/sec. and the inlet temperature of the air is 550°C while the outlet temperature is 70°C. Recycled material introduced through the powder inlet 10 amounts to 1700 kg/hour. The height of the fluidized particle layer 5 is app. 35 cm.

The average residence time of the particles in the fluidized layer may under these conditions be estimated to 15 minutes.

Through the outlet 11 material is withdrawn in a quantity of 3400 kg/hour, which by sieving is separated in an oversize fraction having a particle size above 2.1 mm (50 kg/hour), a coarse product fraction having a particle size between 1.2 and 2.1 mm (300 kg/hour), a fine product fraction having a particle size between 0.6 and 1.2 mm (2450 kg/hour) and an undersize fraction having a particle size below 0,6 mm (600 kg/hour).

In the collector unit 9 which is a bag filter 300 kg/hour entrained particles are collected and recycled to the feed tank 1.

The total amount of the oversize fraction together with 400 kg/hour of the fine product fraction is ground in a grinding unit having a sieve of mesh size 3000 microns, and together with the undersize fraction led to the fluid bed unit as seed or nuclei particles. 650 kg/hour fine product fraction is recycled to inlet 10 without prior grinding.

The remaining material from the product fractions has a sphericity of 0.9 (Krumbein and Sloss, 1955) and is led through an oven in which the remaining moisture and organic additions (app. totally 4% by weight) are removed and afterwards the sintering is performed in a rotary kiln at a temperature of app. 1500°C. The residence time of the particles at this temperature is app. 10 minutes.

The sintered particles is subject to a further sieving operation to assure that substantially all the product has a particle size between 0.4 and 1.5 mm. The sphericity of the particles is excellent and their density app. 2.50—2.85 g/cm³. The crushing strength according to the above method is 6.5% by weight, for which reason the product must be regarded as being excellently suitable as a propping agent.

**Claims**

1. A process for the production of sintered spheres, suitable for use as fracture propping agent in oil and gas wells, characterized in,

(a) preparing an aqueous feed suspension comprising an aluminous-siliceous ore containing along with hydrated alumina, a predominant amount of aluminium silicates and impurities occurring therewith in nature, and a binder,

(b) continuously atomizing said feed suspension into a layer of already partly dried aluminous-siliceous particles fluidized in a stream of drying air,

(c) continuously recovering particles from said layer,

(d) continuously separating said recovered particles in oversize, undersize and product fractions making allowance for shrinkage in the subsequent sintering operation,

(e) continuously recycling material selected from the group consisting of undersize fractions, relative fine product fractions, ground product fractions and ground oversize fractions, to the layer of fluidized particles at a site at substantial distance, measured along the flow path of the particles, from the site where said recovering of particles takes place, and

(f) drying and sintering the non-recycled product fractions by heating them at a temperature between 1200 and 1650°C.

2. A process according to claim 1, wherein the aqueous feed suspension contains 40—60% by weight aluminous-siliceous ore having a particle size below 20 micron and 0,25—5% by weight binder selected from the group consisting of polyvinyl alcohol, polyvinyl acetate, methyl cellulose, dextrin and molasses.

3. A process according to claim 1, wherein the material recycled in step (e) has been ground to a controlled particle size distribution.

4. A process according to claim 1, wherein the stream of drying air fluidizing the particles has a velocity of 0.5—1.5 m/s.

5. A process according to claim 1 wherein an aluminous-siliceous ore is used containing aluminium compounds in an amount corresponding to 45—60% $Al_2O_3$ (analysed after ignition at 800°C).

6. A process for the production of binder-containing spheres for use in the manufacture of sintered spheres, characterized in

(a) preparing an aqueous feed suspension comprising an aluminous-siliceous ore containing along with hydrated alumina, a predominant amount of aluminium silicates and impurities occurring therewith in nature, and a binder,

(b) continuously atomizing said feed suspension into a layer of already partly dried aluminous-siliceous particles fluidized in a stream of drying air,

(c) continuously recovering particles from said layer,

(d) continuously separating said recovered particles in oversize, undersize and product fractions, and

(e) continuously recycling material selected from the group consisting of undersize fractions, relative fine product fractions, ground product fractions and ground oversize fractions, to the layer of fluidized particles at a site at substantial distance, measured along the flow path of the particles, from the site where said recovering of particles takes place.

## Revendications

1. Procédé pour la fabrication de billes frittées aptes à être utilisées comme agents d'étayement des fractures dans les puits de pétrole ou de gaz, caractérisé par

(a) la préparation d'une suspension aqueuse de départ comprenant un minerai alumino-silicieux contenant, en dehors d'alumine hydratée, une quantité prédominant de silicates d'aluminium et d'impurités qui se trouvent avec ces derniers dans la nature, et un liant;

(b) l'atomisation continue de ladite suspension de départ dans une couche de particules alumino-silicieux déjà partiellement séchées qui sont fluidisées dans un courant d'air de séchage;

(c) la récupération continue des particules de ladite couche;

(d) la séparation continue desdites particules récupérées en une fraction sur-dimensionnée, une fraction sous-dimensionnée et une fraction convenant pour le produit final, en tenant compte du retrait qui se produira lors de l'opération de frittage ultérieure;

(e) le recyclage continu d'un matériau choisi parmi le groupe constitué par les fractions sous-dimensionnées, les fractions relativement fines parmi les fractions convenables comme produit final, les fractions broyées convenant au produit final, et les fractions broyées sur-dimensionnées, vers une couche de particules fluidisées et en un endroit de cette couche situé à une distance importante de l'endroit où a lieu ladite récupération de particules, cette distance étant mesurée le long du trajet d'écoulement des particules; et

(f) le séchage et le frittage des fractions non recyclées convenant pour le produit final par chauffage à une température comprise entre 1200 et 1650°C.

2. Procédé selon la revendication 1, caractérisé en ce que la suspension aqueuse de départ contient de 40 à 60% en poids de minerai alumino-silicieux dont la granulométrie est inférieure à 20 microns et de 0,25 à 5% en poids d'un liant choisi parmi l'alcool de polyvinyle, la méthyl-cellulose, le dextrine et les molasses.

3. Procédé selon la revendication 1, caractérisé en ce que le matériau recyclé dans l'étape (e) a subi un broyage à granulométrie contrôlée.

4. Procédé selon la revendication 1, caractérisé en ce que le courant d'air de séchage utilisé pour fluidiser les particules présente une vitesse comprise entre 0,5 et 1,5 mètres par seconde.

5. Procédé selon la revendication 1, caractérisé en ce que le minerai alumino-silicieux utilisé contient des composés d'aluminium dans une quantité correspondant à 45 à 60% $Al_2O_3$ (analysée après chauffage à 800°C).

6. Procédé pour la fabrication de billes contenant un liant et utilisé pour la fabrication de billes frittées, caractérisé par

(a) la préparation d'une suspension aqueuse de départ comprenant un minerai alumino-silicieux contenant, en dehors, d'alumine hydratée, une quantité prédominant de silicates d'aluminium et d'impurités qui se trouvent avec ces derniers dans la nature, et un liant;

(b) l'atomisation continue de ladite suspension de départ dans une couche de particules alumino-silicieux déjà partiellement séchées qui sont fluidisées dans un courant d'air de séchage;

(c) la récupération continue des particules de ladite couche;

(d) la séparation continue desdites particules récupérées en une fraction sur-dimensionnée, une fraction sous-dimensionnée et une fraction convenant pour le produit final, et

(e) le recyclage continu d'un matériau choisi parmi le groupe constitué par les fractions sous-dimensionnées, les fractions relativement fines parmi les fractions convenables comme produit final, les fractions broyées convenant au produit final, et les fractions broyées sur-dimensionnées, vers une couche de particules fluidisées et en un endroit de cette couche situé à une distance importante de l'endroit où a lieu ladite récupération de particules, cette distance étant mesurée le long du trajet d'écoulement des particules.

## Patentansprüche

1. Verfahren zur Herstellung von gebrannten Sphären zur Verwendung als Fraktionsproppant in Öl- und Gasquellen, gekennzeichnet durch

(a) Herstellung einer wässrigen Speisesuspension, die aluminium- und silikathaltiges Erz, welches zusammen mit hydratisiertem Aluminiumoxyd eine überwiegende Menge an Aluminiumsilikaten und damit in Natur vorkommenden Unreinheiten enthält, sowie ein Bindemittel umfasst,

(b) kontinuierliche Zerstäubung der genannten Speisesuspension in eine Schicht aus schon teilweise getrockneten aluminium- und silikathaltigen Partikeln, die in einem Strom von Trockenluft fluidisiert sind,

(c) kontinuierliche Austragung von Partikeln aus der genannten Schicht,

(d) kontinuierliche Trennung der ausgetragenen Partikel in Überkorn-, Unterkorn- und Produktfraktionen unter Berücksichtigung des Ausmasses für die bei der anschliessenden Sinterung erfolgende Schwindung,

(e) kontinuierliche Rückführung von Material aus der Gruppe, die aus Unterkornfraktionen, relativ feinen Produktfraktionen, zermahlenen Produktfraktionen und zermahlenen Überkornfraktionen besteht, in die Schicht aus fluidisierten Partikeln an einer Stelle, die sich, in der Strömungsrichtung der Partikel gemessen, in erheblichem Abstand von der Stelle befindet, wo die erwähnte Austragung von Partikeln erfolgt, und

(f) Trocknen und Sintern der nicht-rückgeführten Produktfraktionen durch Erhitzen auf eine Temperatur zwischen 1200 und 1650°C.

2. Verfahren nach Anspruch 1, dadurch gekennzeichnet, dass die wässrige Speisesuspension 40—60 Gew.-% aluminium- und silikathaltiges Erz mit einer Korngrösse unter 20 Mikron und 0,25—5% Gew.-% Bindemittel aus der Gruppe Polyvinylalkohol, Polyvinylacetat, Methylcellulose, Dextrin oder Melasse enthält.

3. Verfahren nach Anspruch 1, dadurch gekennzeichnet, dass das in Stufe (e) rückgeführte Material auf eine kontrollierte Korngrössenverteilung zermahlen worden ist.

4. Verfahren nach Anspruch 1, dadurch gekennzeichnet, dass der Trockenluftstrom, der die Partikel fluidisiert, eine Geschwindigkeit von 0,5—1,5 m/sek. hat.

5. Verfahren nach Anspruch 1, dadurch gekennzeichnet, dass ein aluminium- und silikathaltiges Erz verwendet wird, welches Aluminiumverbindungen in einer Menge von 45—60% $Al_2O_3$ (analysiert nach Erhitzen bei 800°C) enthält.

6. Verfahren zur Herstellung von bindemittelhaltigen Sphären zur Verwendung ebi der Herstellung von gesinterten Sphären, gekennzeichnet durch

(a) Herstellung einer wässrigen Speisesuspension aus aluminium- und silikathaltigem Erz, welches zusammen mit hydratiertem Aluminiumoxyd eine überwiegende Menge von Aluminiumsilikaten und damit in Natur vorkommenden Unreinheiten, und ein Bindemittel enthält.

(b) kontinuierliche Zerstäubung der genannten Speisesuspension in eine Schicht aus schon teilweise getrockneten aluminium- und silikathaltigen Partikeln, die in einem Trockenluftstrom fluidisiert sind,

(c) kontinuierliche Austragung von Partikeln aus der genannten Schicht,

(d) kontinuierliche Trennung der ausgetragenen Partikel in Überkorn-, Unterkorn- und Produktfraktionen, und

(e) kontinuierliche Rückführung von Material aus der Gruppe, die aus Unterkornfraktionen, relativ feinen Produktfraktionen, zermahlenen Produktfraktionen und zermahlenen Überkornfraktionen besteht, in die Schicht aus fluidisierten Partikeln an einer Stelle, die sich, in der Strömungsrichtung der Partikel gemessen, in erheblichem Abstand von der Stelle befindet, wo die erwähnte Austragung von Partikeln erfolgt.